Europäisches Patentamt

European Patent Office

Office européen des brevets

(19)

(11) EP 0 481 387 B1

(12) **EUROPEAN PATENT SPECIFICATION**

(45) Date of publication and mention
of the grant of the patent:
**24.01.1996 Bulletin 1996/04**

(51) Int Cl.6: **G01D 5/26**, G01B 11/02

(21) Application number: **91117453.0**

(22) Date of filing: **14.10.1991**

(54) **Photosensor device**

Optischer Fühler

Capteur optique de mesures

(84) Designated Contracting States:
**DE FR GB IT**

(30) Priority: **15.10.1990 JP 273222/90**

(43) Date of publication of application:
**22.04.1992 Bulletin 1992/17**

(73) Proprietors:
• **SUMITOMO ELECTRIC INDUSTRIES, LTD.**
**Osaka-shi, Osaka 541 (JP)**
• **NIPPON TELEGRAPH AND TELEPHONE**
**CORPORATION**
**Tokyo (JP)**
• **SUMIDEN OPCOM, LTD.**
**Tokyo (JP)**

(72) Inventors:
• **Ozawa, Kazumasa, c/o Yokohama Works of**
**Yokohama-shi, Kanagawa (JP)**
• **Shigehara, Masakazu, c/o Yokohama Works of**
**Yokohama-shi, Kanagawa (JP)**
• **Komiya, Takeo, c/o Yokohama Works of**
**Yokohama-shi, Kanagawa (JP)**
• **Tomita, Nobuo, 1097.-4, Ishizuka**
**Ibaraku-gun, Ibaraki (JP)**
• **Arimoto, Kazuhiko, c/o Sumiden Opcom Ltd.**
**Tokyo (JP)**

(74) Representative: **Grünecker, Kinkeldey,**
**Stockmair & Schwanhäusser, Anwaltssozietät**
**D-80538 München (DE)**

(56) References cited:
EP-A- 0 291 394          WO-A-88/08959
US-A- 4 681 395

• JOURNAL OF LIGHTWAVE TECHNOLOGY vol.
9, no. 4, April 1991, 9 NEW YORK pages 545-
551; GANG HE, FRANK CUOMO: 'A LIGHT
INTENSITY FUNCTION SUITABLE FOR
MULTIMODEFIBER-OPTIC SENSORS'

**Description**

BACKGROUND OF THE INVENTION

(Field of the Invention)

The present invention relates to a photosensor device that is capable of measuring the shape or position of an object of interest in an indirect and precise manner.

(Prior Art)

A common method for measuring the shape or position of an object of interest in an indirect and precise manner is processing the image information obtained with a variety of television cameras. However, the applicability of this method is limited because it requires complicated and bulky equipment.

In contrast, the use of fiber optics to measure the shape or position of an object of interest in an indirect manner has the advantage that it can be implemented with simple and compact equipment.

US patent 4861131 describes a photosensor device for determining the displacement of an object relative to the optical system. The photosensor device comprises two optical fibers each having a light-projecting unit and a light-receiving unit. An optical fiber is located on either side of and parallel to the optical axis of a condensor lens. Their respective ends which face the condensor lens are longitudinally staggered along the optical axis whereby the respective emitted beam of light contacts the plane of the object at different positions. However, since measurement of the displacement of the object is determined on the reflected light received from two different points on the surface of the object, such a detection system is merely suited to detection of flat surfaces. Further, this system also requires a considerable number of optical parts and involves detailed calibration.

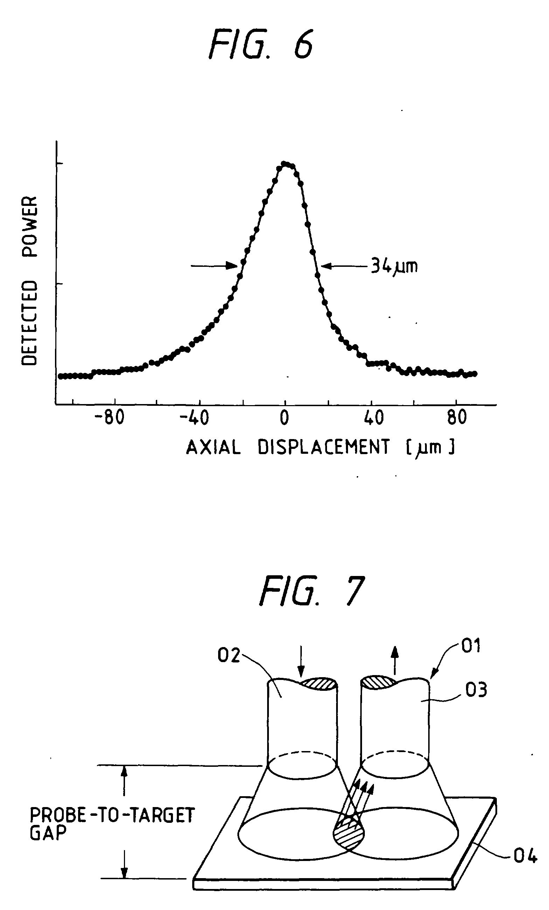

Fig 7 shows a prior art fiber optics sensor head which is generally indicated by 01. As shown, the sensor head 01 comprises a light-projecting element 02 and a light-receiving element 03 that are positioned side by side, with each element being composed of a multiple of optical fibers that are bundled together in precise alignment. If the tip of the probe is in contact with an object to be measured (or target) 04, the light issuing from the light-projecting element 02 returns to said element without being supplied to the light-receiving element 03. If, on the other hand, the probe is detached from the target 04 so as to provide a certain gap (probe -to- target gap), the light issuing from the light-projecting element 02 with a certain beam divergence angle is reflected by the target 04 over the hatched area to be admitted into the light-receiving element 03. In a fiber optics sensor device using the above-described sensor head 01, the change in the amount of light reflected from the target 04 is detected to measure small displacements of the target, or small changes in its shape or position. As shown in Fig. 7, the light-projecting unit of the sensor head 01 is separate from the light-receiving unit and diffuse light is emitted from the projecting unit. Since the light-receiving unit receives only the light that is reflected from the hatched area of the target, the resolving power of the sensor head 01 in the direction of a plane normal to the optical axis is smaller than that in the axial direction.

SUMMARY OF THE INVENTION

An object of the present invention is to provide a photosensor device which overcomes the disavantages of the prior art devices and which allows indirect measurement of the shape or position of a target, and which device is characterized by a simple and compact configuration and which yet has high resolving power in three-dimensional directions.

In order to attain this object, the present invention presents a photosensor device comprising the features set out in claim 1. Alternatively, the photosensor device comprises the features set out in claim 4.

BRIEF DESCRIPTION OF THE DRAWINGS

Fig. 1 is a diagram showing schematically the photosensor device of the present invention;
Fig. 2 is a diagram showing schematically a photosensor device according to an embodiment of the present invention;
Fig. 3 shows the end face of an optical connector that was measured for the core center position of optical fibers in the embodiment;
Figs. 4(a) and 4(b) are diagrams illustrating a technique for determining the edge of a V-groove;
Fig. 5 tabulates the fidelity of reproducing the core center position with the photosensor device of the present invention;
Fig. 6 is a characteristic diagram that shows the relationship between the distance from the sensor head to a plane mirror and the amount of reflected light from the mirror; and
Fig. 7 is a diagram showing schematically the structure of a prior art fiber optics sensor head.

DETAILED DESCRIPTION OF THE PREFERRED EMBODIMENTS

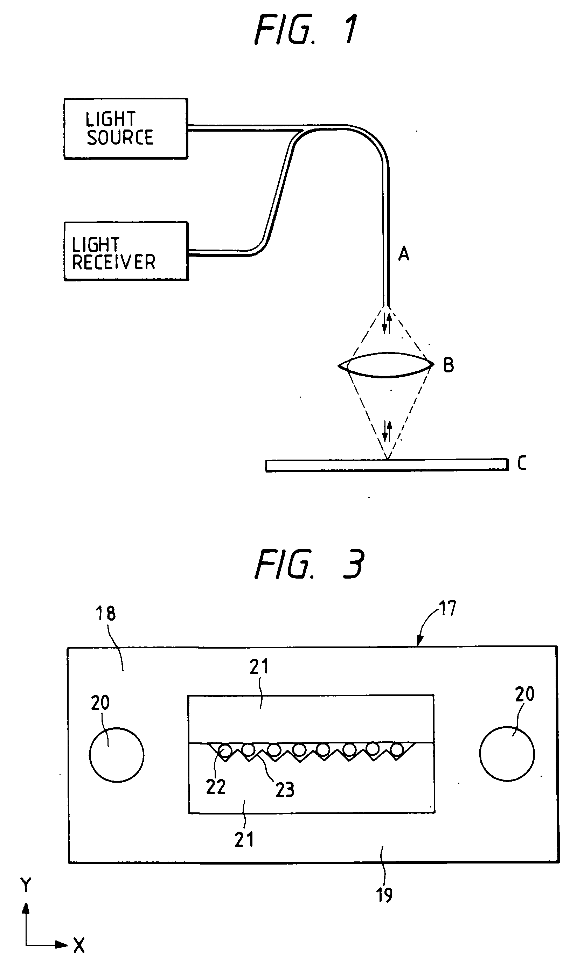

The configuration of the device of the present invention is shown schematically in Fig. 1. Diffuse light projected from an optical fiber A is transformed to a convergent beam by means of a condenser lens B and by positioning a target C at the focal point of the convergent beam, the light reflected from every small portion of the target C can be detected. The photosensor of the present invention which operates in the manner described above has the advantage that it insures high resolution not only in the direction of the optical axis but also in the direction of a plane normal to the optical axis.

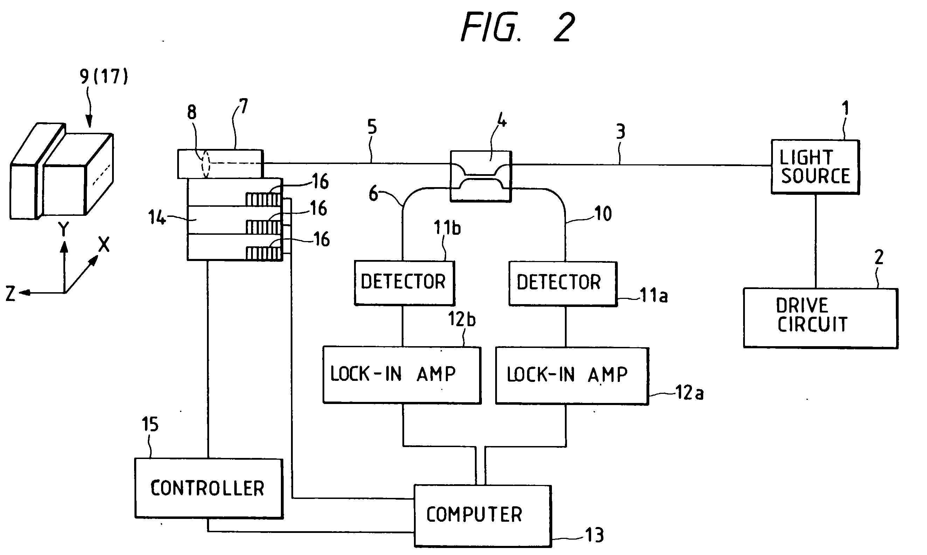

An embodiment of the present invention is described below in detail with reference to accompanying Figs. 2 - 6.

Fig. 2 shows a photosensor device according to an embodiment of the present invention. Shown by a in Fig. 2 is a light source in the form of a semiconductor laser that is operated by a drive circuit 2 to emit light at a wavelength of 830 nm as it is modulated to have a frequency of 10 kHz. The light issuing from the light source 1 is guided by an optical fiber 3 to a 3-dB optical coupler 4 where it is split into two beams, one being launched into an optical fiber 5 and the other into an optical fiber 6. All of the optical fibers used in the embodiment under discussion are of a graded-index (GI) type and have a core diameter of 50 μm. The beam travelling through the optical fiber 5 is admitted into a sensor head 7 where it is focused by a condenser lens (graded index lens) 8 and projected as a convergent beam onto a target 9. The light reflected from the target 9 is collected by the condenser lens 8 and launched again into the optical fiber 5 to be admitted into the optical coupler 4, where it is split into two beams, one being a launched into the optical fiber 3 and the other into an optical fiber 10.

The light issuing out of the optical fiber 10 is detected by a detector 11a which measures the amount of light reflected from the target 9 whereas the light issuing out of the optical fiber 6 is detected by a detector 11b which measures the amount of light projected onto the target 9. The measured amounts of light are amplified by lock-in amplifiers 12a and 12b, respectively. The amplified signals are fed into a computer 13 which, on the basis of the ratio of those two signals, determines the reflectance at the point on the target 9 where the convergent beam is projected.

The sensor head 7 is mounted on a three-axis stage 14, which can be moved in three directions X, Y and Z by means of the computer 13 via a controller 15. The three-axis stage 14 is equipped with a linear encoder 16 for each axis and the computer 13 is capable of reading the position of each axis in a correct way.

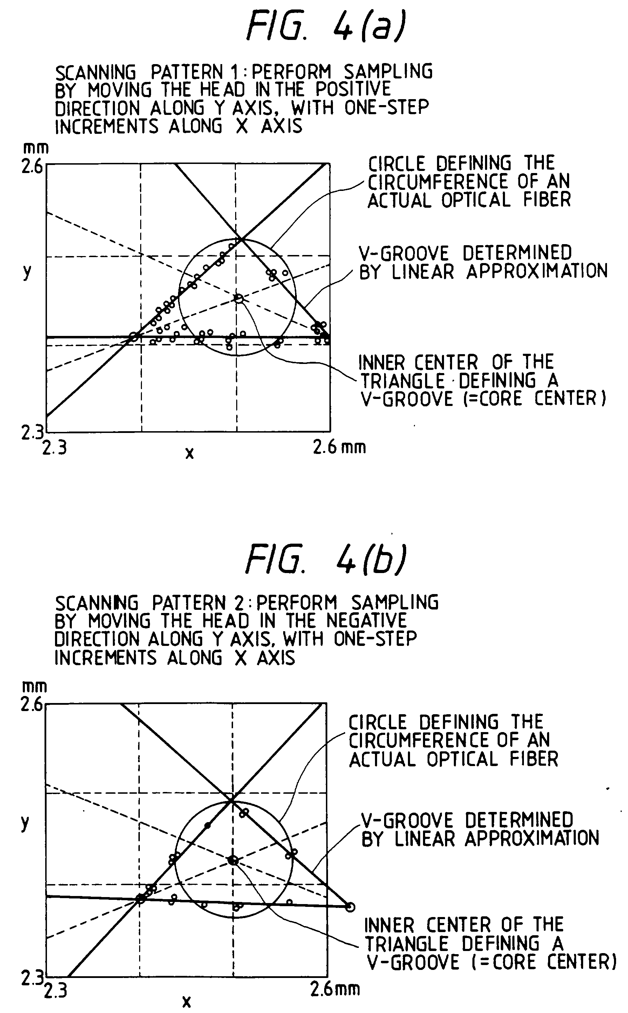

The target 9 is an eight-fiber optical connector 17. The end face 18 of the connector 17 is as shown in Fig. 3 and forms a smooth plane that measures 3 mm x 6.4 mm. The plastic portion 19 of the connector 17 has two through-holes 20 (i.e. = 0.69 mm) for insertion of guide pins. The silicone portion 21 has eight V-grooves 23 that are spaced apart by 250 um for fixing optical fibers 22. The individual optical fibers 22 (o.d. = 125 μm) are fixed in contact with the V-grooves 23 by means of an adhesive. Thus, the gap between each optical fiber 22 and the V-groove 23 in which it is fixed is filled with the adhesive.

With the equipment described above, an experiment was conducted to determine the center of the core of each optical fiber 22 by recognition of the shape of the end face 18 of the optical connector 17. First, the optical connector 17 was fixed in such a way that the end face 18 was normal to the optical axis of the sensor head 7.

Then, the three-axis stage 14 was moved in such a way that the light projected through the condenser lens 8 would be focused at an appropriate position on the end face 18 of the connector. The three-axis stage 14 was adjusted in the direction of Z axis in such a way that the detector 11a would detect a maximum amount of reflected light. Subsequently, with the amount of light projected onto the end face 18 of the connector and the amount of light reflected therefrom being detected, the silicone portion 21 of the end face 18 was scanned by moving the three-axis stage 14 by increments of 45 μm and 2 μm in the directions of X and Y axes, respectively. During the scanning, the computer 13 stored the values of reflectance at respective scan points on the end face 18 of the connector, as well as the values read by the encoders at those points in the directions of X and Y axes.

The silicone portion 21 of the connector's end face 18 has a higher reflectance than the optical fibers 22 or the adhesive, so by processing the obtained data with an appropriate threshold being set for the magnitude of reflectance, the edge shape of each V-groove 23 can be detected. When the reflectance at each point on the end face 18 of the connector was represented on eight scales of gradation by image processing of the data, it was found that the silicone portion 21 having a higher reflectance than the plastic portion 19 and the V-grooves 23 containing the optical fibers 22 and the adhesive each having a lower reflectance than the silicone portion 21 were recognized.

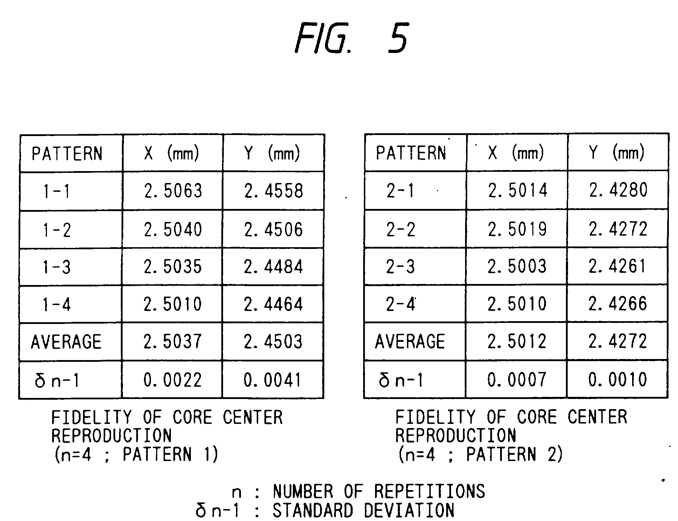

The thus obtained data for the areas near the V-grooves 23 were analyzed in greater details to determine the position of the center of the core of each optical fiber 22. To this end, the edges of V-grooves 23 were approximated by straight lines as shown in Figs. 4(a) and 4(b); a maximum value (Max) of the reflectance in the silicone portion 21 and a minimum values (Min) of the reflectance in the optical fibers 22 or the adhesive portion were processed with Min + (Max - Min)/8 being used as a binary threshold for the edge recognition of the V-grooves 23. The size of each V-groove was determined to be smaller than it actually was but when the position of the center of the core of each optical fiber 22 was calculated on the assumption that each optical fiber 22 is inscribed in the V-groove 23 in which it is fixed, the position of core center could be detected with an accuracy of $\sigma < 5$ μm as tabulated in Fig. 5.

In the embodiment under discussion, the end face of an optical connector is used as the target of measurement but it should, of course, be understood that the shape or position of other targets can be measured in a similar way if the threshold value is modified appropriately.

In the embodiment, GI fibers having a core diameter of 50 μm are used but measurements can be accomplished with higher resolution by using SM (single-mode) fibers of a smaller core dia meter (< 10 μm).

The same method as described above may be applied to a planar target for detecting any flaws or defects on its surface or for measuring its surface roughness. In this case, the sensor head is scanned two-dimensionally parallel to the plane surface of the target and amount of light reflected from the target surface is monitored.

To evaluate the effectiveness of the photosensor device of the present invention, an experiment was also conducted with equipment that was the same as shown in Fig. 2 except that a plane mirror was used as the target in place of the optical connector. First, the plane mirror was fixed normal to the optical axis of the sensor head 7. With light being projected from the sensor head 7 onto the plane mirror, the three-axis stage 14 was moved only in the direction of Z axis to investigate the relationship between the distance from the plane mirror to the sensor head 7 and the amount of reflected light from the mirror. Fig. 6 shows the results of a measurement that was conducted with equipment of the same configuration as shown in Fig. 2 except that SM fibers were substituted for the GI fibers. The horizontal axis of the graph shown in Fig. 6 plots the distance between the sensor head 7 and the plane mirror, and the vertical axis plots the reflectance of light from the mirror. As shown, the reflectance of light reflected from the mirror increased abruptly at a point near the focus point of the convergent beam from the condenser lens.

By making use of such characteristic of the reflected light at a point near the focus point of the convergent beam, small displacements in the direction of the optical axis as well as the amplitude or period of vibrations can be measured.

Calculations show that the change in the amount of light that occurs when the distance from the sensor head to the target deviates from the case for maximum light-acceptance is expressed by:

$$S = \frac{t_{max}}{2\, m^2\, r_{max}} \qquad (1)$$

where

S:       the sensitivity of the photosensor;
$2r_{max}$:   the core diameter of an optical fiber;
$t_{max}$:   tan[maximum light-acceptance angle of fiber); and
m:       the magnification of the condenser lens.

Hence, in order to increase the sensitivity for detection of displacements, the value of $2r_{max}$ may be reduced, $t_{max}$ increased and m reduced. In other words, the requirement for a higher sensitivity of displacement detection can be met by using an optical fiber that has a smaller core diameter and a higher refractive index while reducing the magnification of the condenser lens.

In the sensor device shown in Fig. 2, the optical coupler 4 may be replaced by a beam splitter. If desired, the drive circuit 2 may be controlled by the computer 13 in such a way that any variations in the level of illumination from the light source 1 are compensated on the basis of the results of monitoring of the amount of light being projected onto the target.

As described on the foregoing pages, the photosensor device of the present invention enables the shape or position of targets to be correctly measured with a simple configuration of equipment.

## Claims

1. A photosensor device comprising:

    a light source (1);

    a sensor head (7) including a light-projecting unit, a light-receiving unit and a condenser lens (8), said light-projecting unit being coaxial with said light-receiving unit, said condenser lens transforming the light from said light source into a convergent beam, said sensor head picking up the reflected light after having being reflected from a target whose plane is normal to the optical axis of said sensor head (7) and collected again by said condenser lens; and

    detector means (11a, 11b, 13) for detecting the reflected light which has been picked up by said sensor head to detect the displacement of said target in the direction of the optical axis,

    **characterised in that**,

    said sensor head comprises a single light-receiving unit and coaxial light-projecting unit;

    said convergent light beam output from said condenser is focused on a reference target plane and said detector means detects the displacement of the target from said reference target plane along said optical axis direction by detecting a change in the amount of the reflected light.

2. A photosensor device as claimed in claim 1, wherein said detector means detects a reflectance at small surfaces of said target.

3. A photosensor device as claimed in claim 1, wherein said detector means detects a surface state of said target.

4. A photosensor device comprising:

    a light source (1);

    a sensor head (7) including a light-projecting unit, a light-receiving unit and a condenser lens (8), said light-projecting unit being coaxial with said light-receiving unit, said condenser lens being disposed so that the optical axis is normal to a target and transforms the light from said light source into a convergent beam, said sensor head picking up the reflected light after having been reflected from said target and collected again by said condenser lens; and

detector means (11a, 11b, 13) for detecting the reflected light which has been picked up by said sensor head,

**characterised in that**,

said sensor head comprises a single light-receiving unit and coaxial light-projecting unit;

said convergent light beam output from said condenser is focused on a smooth surface of said target; and by further comprising

means (14, 16) for moving one of said sensor head and said target so that the convergent beam issuing from said sensor head scans said target two-dimensionally, with the distance from said target to said sensor head being maintained so that said sensor head picks up a maximum level of the amount of the reflected light.

5. A photosensor device as claimed in claim 4, wherein said detector means detects the reflectance at small surfaces of said target to determine the shape of said target according to the difference in reflectance.

6. A photosensor device as claimed in claim 4, wherein said detector means detects the amount of reflected light which has been picked up by said sensor head to dertermine the surface state of said target according to the difference in the amount of reflected light.

7. A photosensor device as claimed in claim 4 in which said moving means has a linear encoder (16) mounted thereon and said detector means (13) samples a detection signal as triggered by a counter pulse from said linear encoder.

8. A photosensor device according to any one of the preceding claims in which the transmission of light from the light source to the sensor head and from the sensor head to the detector means is performed through fiber optics.

9. A photosensor device as claimed in claim 8, further comprising compensator means for compensating for the variations in the level of illumination from said light source by monitoring the amount of light beng projected onto said target.

10. A photosensor device according to any one of the preceding claims further comprising means (4) for separating the light to be transmitted from said light source (1) to said sensor head (7) from the light to be transmitted from said sensor head to said detector means (11, 13).

11. A photosensor device as claimed in claim 10, wherein said separating means comprises an optical coupler.

12. A photosensor device as claimed in claim 10, wherein said separating means comprises a beam splitter.

**Patentansprüche**

1. Ein optischer Fühler mit:

einer Lichtquelle (1);

einem Fühlerkopf (7), der eine Lichtprojektionseinheit, eine Lichtempfangseinheit und eine Kondensorlinse (8) enthält, wobei die Lichtprojektionseinheit koaxial zu der Lichtempfangseinheit ist, wobei die Kondensorlinse das Licht von der Lichtquelle in einen konvergenten Strahl umformt, wobei der Fühlerkopf das reflektierte Licht erfaßt, nachdem es von einem Ziel, dessen Ebene senkrecht zu der optischen Achse des Fühlerkopfes (7) ist, reflektiert und wieder durch die Kondensorlinse gesammelt worden ist; und

einer Detektorvorrichtung (11a, 11b, 13) zum Detektieren des reflektierten Lichts, das durch den Fühlerkopf erfaßt worden ist, um die Verschiebung des Ziels in der Richtung der optischen Achse zu detektieren, **dadurch gekennzeichnet**,

daß der Fühlerkopf eine einzige Lichtempfangseinheit und koaxiale Lichtprojektionseinheit umfaßt;

wobei der von dem Kondensor ausgegebene konvergente Lichtstrahl auf eine Referenzielebene fokussiert ist und die Detektorvorrichtung die Verschiebung des Ziels von der Referenzielebene entlang der Richtung der optischen Achse durch Detektieren einer Veränderung in der Menge des reflektierten Lichts feststellt.

2. Ein optischer Fühler nach Anspruch 1, wobei die Detektorvorrichtung einen Reflexionsgrad an kleinen Oberflächen des Ziels detektiert.

3. Ein optischer Fühler nach Anspruch 1, wobei die Detektorvorrichtung einen Oberflächenzustand des Ziels detektiert.

4. Ein optischer Fühler mit:

einer Lichtquelle (1);

einem Fühlerkopf (7), der eine Lichtprojektionseinheit, eine Lichtempfangseinheit und eine Kondensorlinse (8) enthält, wobei die Lichtprojektionseinheit koaxial zu der Lichtempfangseinheit ist, wobei die Kondensorlinse derart angeordnet ist, daß die optische Achse normal zu einem Ziel ist und sie das Licht von der Lichtquelle in einen konvergenten Strahl umformt, wobei der Fühlerkopf das reflektierte Licht erfaßt, nachdem es von dem Ziel reflektiert worden ist und wieder durch die Kondensorlinse gesammelt worden ist; und

einer Detektorvorrichtung (11a, 11b, 13) zum Detektieren des reflektierten Lichts, das durch den Fühlerkopf erfaßt worden ist,

**dadurch gekennzeichnet**, daß

der Fühlerkopf eine einzige Lichtempfangseinheit und koaxiale Lichtprojektionseinheit umfaßt;

wobei der von dem Kondensor ausgegebene konvergente Lichtstrahl auf eine glatte Oberfläche des Ziels fokussiert ist; und

daß weiter vorgesehen ist

eine Vorrichtung (14, 16) zum Bewegen des Fühlerkopfes oder des Ziels derart, daß der von dem Fühlerkopf ausgehende konvergente Strahl das Ziel zweidimensional abtastet, wobei der Abstand von dem Ziel zu dem Fühlerkopf aufrechterhalten wird, so daß der Fühlerkopf einen maximalen Pegel der reflektierten Lichtmenge erfaßt.

5. Ein optischer Fühler nach Anspruch 4, wobei die Detektorvorrichtung den Reflexionsgrad an kleinen Oberflächen des Ziels detektiert, um die Form des Ziels gemäß dem Unterschied im Reflexionsgrad zu bestimmen.

6. Ein optischer Fühler nach Anspruch 4, wobei die Detektorvorrichtung die reflektierte Lichtmenge detektiert, die durch den Fühlerkopf erfaßt worden ist, um den Oberflächenzustand des Ziels gemäß dem Unterschied in der reflektierten Lichtmenge zu bestimmen.

7. Ein optischer Fühler nach Anspruch 4, bei dem die sich bewegende Vorrichtung einen daran angebrachten, linearen Codeumsetzer (16) aufweist, und wobei die Detektorvorrichtung (13) ein Detektionssignal gemäß einer Triggerauslösung durch einen Zählerimpuls von dem linearen Codeumsetzer abtastet.

8. Ein optischer Fühler gemäß einem der vorhergenden Ansprüche, bei dem die Transmission von Licht der Lichtquelle zu dem Fühlerkopf und von dem Fühlerkopf zu der Detektorvorrichtung durch Faseroptiken ausgeführt ist.

9. Ein optischer Fühler nach Anspruch 8, der weiter eine Kompensationsvorrichtung umfaßt zum Kompensieren der Veränderungen im Einstrahlungsniveau von der Lichtquelle durch Überwachen der Lichtmenge, die auf das Ziel projiziert wird.

10. Ein optischer Fühler gemäß einem der vorhergenden Ansprüche, der weiter eine Vorrichtung (4) umfaßt zum Trennen des von der Lichtquelle (1) zu dem Fühlerkopf (7) zu übertragenden Lichts von dem Licht, das von dem Fühlerkopf zu der Detektorvorrichtung (11, 13) zu übertragen ist.

11. Ein optischer Fühler nach Anspruch 10, wobei die trennende Vorrichtung einen optischen Koppler umfaßt.

12. Ein optischer Fühler nach Anspruch 10, wobei die trennende Vorrichtung einen Strahlteiler umfaßt.

**Revendications**

1. Dispositif de photocapteur comprenant :

- une source de lumière (1);
- une tête de capteur (7) comprenant une unité de projection de lumière, une unité de réception de lumière et une lentille convergeante (8), ladite unité de projection de lumière étant coaxiale à ladite unité de réception de lumière, ladite lentille convergeante transformant la lumière de ladite source de lumière en un faisceau convergeant, ladite tête de capteur prélevant la lumière réfléchie après sa réflexion par une cible dont le plan est normal à l'axe optique de ladite tête de capteur (7) et à nouveau récupérée par ladite lentille convergeante; et
- des moyens de détecteur (11a, 11b, 13) pour la détection de la lumière réfléchie qui a été prélevée par ladite tête de capteur pour détecter le déplacement de ladite cible dans la direction de l'axe optique; dispositif caractérisé en ce que :
- ladite tête de capteur comprend une seule unité de réception de la lumière et une unité coaxiale de projection de la lumière; et

- ledit faisceau convergeant de lumière généré par ladite lentille convergeante est focalisé sur un plan de référence de cible et lesdits moyens de détecteur détectent le déplacement de la cible à partir dudit plan de référence de cible le long de ladite direction d'axe optique par détection d'une variation de la quantité de lumière réfléchie.

2. Dispositif de photocapteur selon la revendication 1, dans lequel lesdits moyens de détecteur détectent une réflectance sur de petites surfaces de ladite cible.

3. Dispositif de photocapteur selon la revendication 1, dans lequel lesdits moyens de détecteur détectent un état de surface de ladite cible.

4. Dispositif de photocapteur comprenant :

- une source de lumière (1);
- une tête de capteur (7) comprenant une unité de projection de lumière, une unité de réception de lumière et une lentille convergeante (8), ladite unité de projection de lumière étant coaxiale à ladite unité de réception de lumière, ladite lentille convergeante étant disposée de telle façon que l'axe optique soit normal à une cible et transforme la lumière de ladite source de lumière en un faisceau convergeant, ladite tête de capteur prélevant la lumière réfléchie après avoir été réfléchie par ladite cible et à nouveau récupérée par ladite lentille convergeante; et
- un moyen de détecteur (11a, 11b, 13) pour détecter la lumière réfléchie qui a été prélevée par ladite tête de capteur;
  dispositif caractérisé en ce que :
- ladite tête de capteur comprend une seule unité de réception de lumière et une unité coaxiale de projection de lumière;
- ledit faisceau de lumière convergeant, généré par ladite lentille convergeante, est focalisé sur une surface régulière de ladite cible; et
  en ce qu'il comprend, de plus, des moyens (14, 16) pour déplacer un élément parmi ladite tête de capteur et ladite cible de telle façon que le faisceau convergeant sortant de ladite tête de capteur balaye ladite cible en deux dimensions, la distance de ladite cible à ladite tête de capteur étant maintenue de telle façon que ladite tête de capteur prélève un niveau maximum de quantité de lumière réfléchie.

5. Dispositif de photocapteur selon la revendication 4, dans lequel ledit moyen de détecteur détecte la réflectance sur de petites surfaces de ladite cible pour déterminer la forme de ladite cible selon la différence de réflectance.

6. Dispositif de photocapteur selon la revendication 4, dans lequel ledit moyen de détecteur détecte la quantité de lumière réfléchie qui a été prélevée par ladite tête de capteur pour déterminer l'état de surface de ladite cible selon la différence de quantité de lumière réfléchie.

7. Dispositif de photocapteur selon la revendication 4, dans lequel ledit moyen de déplacement possède un codeur linéaire (16) monté dessus et ledit moyen de détecteur (13) échantillonne un signal de détection déclenché par une impulsion de compteur à partir dudit codeur linéaire.

8. Dispositif de photocapteur selon l'une quelconque des revendications précédentes, dans lequel la transmission de la lumière de la source de lumière à la tête de capteur et de la tête de capteur au moyen de détecteur est effectuée via des fibres optiques.

9. Dispositif de photocapteur selon la revendication 8, comprenant, de plus, un moyen de compensateur pour la compensation des variations du niveau d'illumination de ladite source de lumière par contrôle de la quantité de lumière projetée sur ladite cible.

10. Dispositif de photocapteur selon l'une quelconque des revendications précédentes, comprenant, de plus, un moyen (4) pour la séparation de la lumière à transmettre de ladite source de lumière (1) à ladite tête de capteur (7) de la lumière à transmettre de ladite tête de capteur audit moyen de détecteur (11, 13).

11. Dispositif de photocapteur selon la revendication 10, dans lequel ledit moyen de séparation comprend un coupleur optique.

12. Dispositif de photocapteur selon la revendication 10, dans lequel ledit moyen de séparation comprend un diviseur de faisceau.

## FIG. 1

## FIG. 3

## FIG. 2

EP 0 481 387 B1

# FIG. 4 (a)

SCANNING PATTERN 1: PERFORM SAMPLING
BY MOVING THE HEAD IN THE POSITIVE
DIRECTION ALONG Y AXIS, WITH ONE-STEP
INCREMENTS ALONG X AXIS

CIRCLE DEFINING THE
CIRCUMFERENCE OF AN
ACTUAL OPTICAL FIBER

V-GROOVE DETERMINED
BY LINEAR APPROXIMATION

INNER CENTER OF THE
TRIANGLE DEFINING A
V-GROOVE (=CORE CENTER)

# FIG. 4 (b)

SCANNING PATTERN 2: PERFORM SAMPLING
BY MOVING THE HEAD IN THE NEGATIVE
DIRECTION ALONG Y AXIS, WITH ONE-STEP
INCREMENTS ALONG X AXIS

CIRCLE DEFINING THE
CIRCUMFERENCE OF AN
ACTUAL OPTICAL FIBER

V-GROOVE DETERMINED
BY LINEAR APPROXIMATION

INNER CENTER OF THE
TRIANGLE DEFINING A
V-GROOVE (=CORE CENTER)

10

# FIG. 5

| PATTERN | X (mm) | Y (mm) |
|---|---|---|
| 1-1 | 2.5063 | 2.4558 |
| 1-2 | 2.5040 | 2.4506 |
| 1-3 | 2.5035 | 2.4484 |
| 1-4 | 2.5010 | 2.4464 |
| AVERAGE | 2.5037 | 2.4503 |
| $\delta$ n-1 | 0.0022 | 0.0041 |

FIDELITY OF CORE CENTER
REPRODUCTION
(n=4 ; PATTERN 1)

| PATTERN | X (mm) | Y (mm) |
|---|---|---|
| 2-1 | 2.5014 | 2.4280 |
| 2-2 | 2.5019 | 2.4272 |
| 2-3 | 2.5003 | 2.4261 |
| 2-4 | 2.5010 | 2.4266 |
| AVERAGE | 2.5012 | 2.4272 |
| $\delta$ n-1 | 0.0007 | 0.0010 |

FIDELITY OF CORE CENTER
REPRODUCTION
(n=4 ; PATTERN 2)

n : NUMBER OF REPETITIONS
$\delta$ n-1 : STANDARD DEVIATION

## FIG. 6

## FIG. 7